# EUROPÄISCHE PATENTANMELDUNG

(11) **EP 2 423 640 A1**
(43) Veröffentlichungstag der Anmeldung: **29.02.2012**
(21) Anmeldenummer: 10173726.0
(22) Anmeldetag: 23.08.2010
(51) Int. Cl.: G01C 9/06, G01C 9/20

(54) **Neigungssensor für ein Gerät und Verfahren zur Bestimmung der Neigung eines Gerätes**

(71) Anmelder: Hexagon Technology Center GmbH, 9435 Heerbrugg (CH)
(72) Erfinder: Lippuner, Heinz, CH-9445, Rebstein (CH); Metzler, Bernhard, A-6850, Dornbirn (AT); Amann, Werner, A-6800, Feldkirch (AT)
(74) Vertreter: Kaminski Harmann

(57) **Zusammenfassung**

Neigungssensor (1) für ein Gerät, mit einem ein fliessfähiges Medium (4) aufnehmenden Behälter (3), wobei die Lage des Mediums (4) relativ zum Behälter (3) neigungsabhängig ist und der Behälter (3) eine eckige, insbesondere dreieckige, oder eine elliptische, insbesondere kreisförmige, Grundfläche aufweist, mit einer Quelle elektromagnetischer Strahlung zur Erzeugung von Projektionen wenigstens eines Teils einer Grenzfläche des Mediums (4), mit wenigstens zwei Detektoren (5a, 5b, 5c) zur Erfassung von jeweils einer der Projektionen und zur Umwandlung in Signale, wobei die Detektoren (5a, 5b, 5c) jeweils eine Erfassungsrichtung aufweisen und die Erfassungsrichtungen der Detektoren (5a, 5b, 5c) zueinander gewinkelt angeordnet sind, und mit einer Auswerteeinheit (12) zur Bestimmung der Neigung in zwei Achsen aus den Signalen der wenigstens zwei Detektoren (5a, 5b, 5c), dadurch gekennzeichnet, dass die Neigung aus einer Verknüpfung der Signale für die zwei Achsen gemeinsam bestimmt wird.

## Beschreibung

Die Erfindung betrifft einen Neigungssensor für ein Gerät nach dem Oberbegriff des Anspruchs 1 und ein Verfahren zur Bestimmung der Neigung eines Gerätes nach dem Oberbegriff des Anspruchs 7.

Neigungssensoren finden in verschiedensten Messinstrumenten Verwendung und werden in Verbindung mit diesen zur Bestimmung der Ausrichtung des Instruments oder auch zum Bestätigen oder zum Erreichen einer geforderten Lage eines Gerätes eingesetzt. Insbesondere im Bauwesen und im geodätischen Bereich kommen derartige Sensoren zum Einsatz. Um zu gewährleisten, dass die Koordinatenbestimmung einer Zielmarke korrekt erfolgt und die Lage eines Vermessungsgerätes dabei berücksichtigt wird, muss neben der Position des Geräts dessen Lage relativ zum Schwerefeld der Erde genau erfasst werden können. Zum Zwecke dieser Neigungsbestimmung der Geräte sind bereits Sensoren verschiedener Bauart bekannt.

In der US 2002/0014590 A1 ist ein Neigungssensor mit einem CCD-Array als Detektor gezeigt. Die Sensoren des Arrays befinden sich an einer Wand eines Behälters, der wiederum teilweise mit einer Flüssigkeit befüllt ist. Die Neigung wird dadurch bestimmt, dass die Signale der einzelnen CCD-Sensoren auf dem Array ausgelesen und miteinander verglichen werden.

Der Nachteil dieses Sensors besteht darin, dass die Messung der Neigung in nur eine Richtung ausgeführt werden kann. Für die Bestimmung einer absoluten Neigung in zwei Achsen relativ zu einer Horizontalen muss eine weitere Messung nach einer Positionsveränderung des Sensors durchgeführt oder ein zusätzlicher zweiter Sensor gleicher Bauart eingesetzt werden.

Aus der Offenlegungsschrift DE 41 10 858 ist ein zweiachsiger Neigungsmesser bekannt, bei dem eine geometrische Figur über einen neigungsempfindlichen und strahlablenkenden Sensor auf ein Lineararray projiziert wird. Der Sensor beinhaltet eine Flüssigkeit, deren Lage relativ zum Gerät zu einer Beeinflussung bzw. Ablenkung der Projektion der Figur auf dem Lineararray führt.

Neben den Nachteilen, die durch die Komplexität ihres Aufbaus entstehen, sind Neigungsmesser dieser Bauart aufgrund der benötigten Mindestlänge der Strahlengänge für zwei Teilstrahlen nur begrenzt miniaturisierbar.

In der EP 1 511 971 ist ein optischer Neigungsmesser offenbart, in welchem eine Emission von Strahlung durch eine Strahlungsquelle erfolgt und diese nach dem Durchgang durch ein Aufnahmeelement, das insbesondere eine Flüssigkeit enthält, auf eine Kamera abgebildet wird. Aus der Lage des Flüssigkeitshorizontes relativ zum Neigungsmesser bzw. zur Kamera kann bei dieser Anordnung auf die Neigung des Neigungsmessers geschlossen werden. Die Aufnahme der Lage des Mediums durch eine Kamera erlaubt überdies die Auswertung einer Vielzahl von Merkmalen, insbesondere von Form, Ausdehnung und Lage einer Grenzschicht.

Nachteilig an dieser Ausführung ist, dass die Neigung in nur einer Richtung, bezeichnet als Längsneigung, genau erfolgen kann und die Bestimmung in eine zweite Richtung, Querneigung genannt, anhand einer Verbreiterung des Abbilds der Grenzschicht vorgenommen wird. Die Veränderung dieser Abbildsbreite kann für eine kleine Veränderung der Querneigung sehr gering ausfallen und wird damit nur begrenzt genau auflösbar und auswertbar.

Die Aufgabe der vorliegenden Erfindung besteht in der Bereitstellung eines Neigungssensors und eines Verfahrens, die eine exakte Ermittlung der absoluten Neigung eines Geräts im Raum ermöglichen, dabei eine verbesserte Messgenauigkeit und einen möglichst grossen Messbereich über den Raumwinkel aufweisen.

Eine weitere Aufgabe der Erfindung ist es einen Neigungssensor bereitzustellen, der durch seine einfache und kompakte Ausführungsform besser in Messgeräte integrierbar ist.

Diese Aufgaben werden durch die Verwirklichung der kennzeichnenden Merkmale der unabhängigen Ansprüche 1 und 7 gelöst. Merkmale, die die Erfindung in alternativer oder vorteilhafter Weise weiterbilden, sind den abhängigen Patentansprüchen zu entnehmen.

Ein erfindungsgemässer Neigungssensor weist mindestens eine Strahlungsquelle auf, mit welcher eine Flüssigkeit in einem Gefäss angestrahlt wird und womit durch diese Bestrahlung ein Abbild der Grenzschicht der Flüssigkeit auf zwei oder mehreren Kameras erzeugt wird. Die Strahlungsquelle kann hierfür Licht im optisch wahrnehmbaren Wellenlängenbereich emittieren, kann aber auch so ausgeführt sein, dass Strahlung in einem visuell nicht wahrnehmbaren Bereich ausgesendet wird. Damit auf den Kameras eine jeweils der aktuell vorliegenden Neigung entsprechende Abbildung erfasst werden kann, hat die Flüssigkeit die Eigenschaft, dass sie relativ zum Gefäss neigungsabhängig ist und dabei in Abhängigkeit von Form und Grösse des Gefässes eine weitgehend ebenmässige Grenzfläche, insbesondere einen Horizont, ausbildet. Die Kameras sind derart angeordnet, dass sie jeweils zumindest einen Teil der Grenzschicht der Flüssigkeit erfassen und gleichzeitig bezüglich ihrer Blickrichtung gewinkelt zueinander positioniert sind. Zusätzlich sind diese dazu vorgesehen die erfassten Bilder in Signale umzuwandeln und können zu diesem Zweck z.B. als CCD-Arrays oder Flächensensoren ausgeführt sein. Darüber hinaus weist der Neigungssensor eine Auswerteeinheit auf, mit der die Bestimmung der Neigung aus den Signalen der Kameras dadurch erfolgen kann, dass die Signale miteinander verknüpft werden und daraus eine absolute Neigung des Sensors, d.h. eine Neigung in zwei Richtungen, relativ zum Schwerefeld der Erde sehr genau bestimmt wird. Diese Neigungsbestimmung kann durch die räumliche Anordnung der Kameras für beide Richtungen gemeinsam durchgeführt werden. Z.B. können damit durch nur eine Messung mit einem erfindungsgemässen Sensor die Lage eines Geräts und die Abweichung der Lage zum Schwerefelde der Erde in zwei zueinander senkrechten Richtungen bestimmt werden.

Ein erfindungsgemässer Neigungssensor findet seinen Einsatz z.B. im Bereich der geodätischen Vermessung. Zum Vermessen von Punkten in einer Landschaft werden geodätische Messgeräte, wie z.B. eine Totalstation, eingesetzt. Sollen die Koordinaten einer Zielmarke, die als Anmesspunkt dient, bestimmt werden, so werden ausgehend von einer bekannten Position mittels eines Messstrahls die Distanz und gleichzeitig die Winkel zu diesem Punkt bestimmt. Um eine genaue Koordinatenbestimmung des Punktes gewährleisten zu können, muss dabei für die Winkelbestimmung der Neigungswinkel des Messgeräts relativ zum Schwerefeld der Erde mitberücksichtigt werden.

Zu diesem Zwecke kann in ein Vermessungsgerät ein erfindungsgemässer Neigungssensor integriert werden. Vorteilhaft ist dabei, dass der Sensor einfach im Gerät verbaut werden kann und gleichzeitig die Neigung des Gerätes in zwei Richtungen, bzw. für zwei Achsen des Geräts, genau bestimmen kann. Auch für den Fall einer Überkopfmessung bleibt die Funktion dieses Neigungssensors erhalten und ermöglicht somit die Verwendung des Vermessungsgeräts für derartige Aufgaben. Dies wird durch eine erfindungsgemässe Anordnung der Kameras, z.B. senkrecht auf einer dreieckigen Grundfläche, wobei sich ihre Blickrichtungen im Inneren des Gefässes überschneiden und so die notwendigen Signale erfasst werden können, ermöglicht. Mit einer dreieckigen Gefässgrundfläche kann zudem der zur Montage des Sensors notwendige Raumbedarf klein gehalten werden. Die Messdaten dieses Sensors werden mit den Winkel- und Abstandsmessdaten der Totalstation kombiniert und daraus die exakten Raumkoordinaten der Zielmarke bestimmt.

Ein alternatives Anwendungsgebiet für Neigungssensoren sind Koordinatenmessmaschinen mit Gelenkarm. Diese Geräte werden zum mit hoher Genauigkeit erfolgenden Vermessen von Objektoberflächen verwendet, insbesondere in der fertigenden Industrie, für die das Vermessen und Überprüfen von Werkstückoberflächen hohe Bedeutung hat. Zwischen den beiden Enden des Gelenkarms sind hier mehrere zueinander bewegbar verbundene Glieder oder Armabschnitte angeordnet, sodass ein Messende des Arms mit einem Tast-Glied innerhalb eines Raumabschnitts frei bewegbar ist, wobei das andere Ende des Arms mit einer Basis verbunden ist. Weiters sind den Gelenken des Arms Lagemesseinrichtungen zugeordnet, sodass jeweils eine Stellung oder Orientierung der Glieder zueinander, also eine relative Lage jeweils zwischen den Gliedern, gemessen werden kann. Beispielsweise werden dafür Winkelmesser und/oder Längenmesser eingesetzt, die als Messgrössen Längen, Dreh- oder Schwenkwinkel ermitteln. Für eine genaue Vermessung von Objekten muss ausserdem die Lage der Basis bekannt sein. Für diese Lagebestimmung kann ein erfindungsgemässer Neigungssensor an der Basis vorgesehen sein, dessen Messdaten wiederum mit den Daten der Winkelmesser und/oder Längenmesser der Koordinatenmessmaschine kombiniert werden und daraus die exakte Position des Tast-Gliedes im Raum ableitbar machen.

Das Gefäss des Sensors kann neben der erwähnten dreieckigen Grundfläche eine vieleckige oder auch eine elliptische, insbesondere kreisförmige, Form aufweisen, wobei die Gefässwände und auch die Kameras ebenfalls senkrecht zu dieser Grundfläche angeordnet sein können. Mit diesen Ausführungsformen kann der benötigte Raumbedarf des Sensors entsprechend seines vorgesehen Einsatzbereiches weiter optimiert werden. In beiden Ausführungen können die Kameras zur Aufnahme der Abbildungen bzw. von Projektionen der Grenzfläche der Flüssigkeit direkt in die Gefässwände integriert sein oder befinden sich parallel zu den, insbesondere transparenten, Gefässwänden. Abbildungen, die bei solch elliptischen oder anderen polygonalen Gefässausführung erzeugt werden, können zu von einer Geraden abweichenden Verläufen der projizierten Grenzschicht führen. Derartige Gefässe können z.B. einfache metallische Dosen oder auch aus Acrylglas gefertigte, kleine polygonale Kisten sein.

Neben den Formen und Abmessungen des Gefässes ist für die Bestimmung der Neigung die Lage der Kameras bezüglich der Gefässwände relevant. Daher werden die Kameras insbesondere so angeordnet, dass ihre Blickrichtungen parallel zur Grundfläche des Gefässes ausgerichtet sind und somit eine genaue Erfassung der Abbildungen und damit verbunden der Bestimmung der Neigung durchführbar ist.

Die Kameras können dafür als Detektoren unterschiedlichster Bauart ausgeführt sein. Z.B. bieten Linien- oder Flächensensoren den Vorteil, dass für die jeweilige Detektorgrösse eine entsprechende Fläche detektiert und punktuell aufgelöst erfasst werden kann. Flächensensoren können zusätzlich in ihrer jeweiligen Grösse und auch in ihrer Formen entsprechend den Gefässwänden ausgeführt sein und dadurch eine grösstmögliche Aufnahmefläche bereitstellen. Insbesondere können zu diesem Zwecke die Kameras mit einer das Gefäss auskleidende Dimensionierung gewählt werden.

Damit eine grössere Anzahl Daten erfasst und ausgewertet werden kann und eine Steigerung der Genauigkeit der Neigungsbestimmung erreicht wird, kann zu den zwei notwendigen Kameras eine oder mehrere weitere Kameras hinzugefügt werden. Die Blickrichtung dieser dritten Kamera kann in jener Ebene liegen, welche durch die Blickrichtung der beiden anderen Kameras gebildet wird. Alternativ dazu kann die Blickrichtung der dritten Kamera in einem Winkel zu der gebildeten Ebene orientiert sein.

Zum Erfassen eines, insbesondere gemeinsamen, Teils der Grenzfläche können die Kameras so angeordnet sein, dass sich deren Blickrichtungen bzw. Flächennormalen durch das Sensorzentrum in einem Punkt überschneiden, wobei sich dieser Punkt insbesondere innerhalb des Gefässes befindet und in einer definierten Höhe über der Grundfläche vorzufinden ist. Insbesondere liegt dieser Schnittpunkt senkrecht über dem Flächenschwerpunkt der Behältergrundfläche. So können die Detektoren bei einem Gefäss mit dreieckiger Grundfläche und senkrechten Wänden z.B. jeweils zentrisch und parallel zu den Wänden angebracht sein und weisen dann einen gemeinsamen Schnittpunkt über dem Flächenschwerpunkt der Grundfläche auf.

Da Silikonöle zumeist niederviskos sind und durch ihre geringe Trägheit eine schnelle Messung ermöglichen, finden diese insbesondere in einem erfindungsgemässen Neigungssensor als geeignete Flüssigkeit ihren Einsatz. Dadurch können mögliche Bewegungen von Flüssigkeiten, z.B. Wellenbildungen oder Turbulenzen an der Flüssigkeitsoberfläche, gedämpft werden und im Vergleich zu anderen Flüssigkeiten schnell aufeinander folgende Messungen mit grosser Genauigkeit erfolgen.

Die Bestimmung der Neigung erfolgt unter Verwendung eines erfindungsgemässen Verfahrens. Nach dem Erzeugen der Abbildungen der Flüssigkeitsoberfläche auf den Kameras werden diese in Signale umgewandelt, wobei die Kameras zueinander gewinkelt bezüglich ihrer Blickrichtung angeordnet sind, so dass die Grenzlinie aus verschiedenen Richtungen aufgenommen werden kann. Die Signale werden dann miteinander derart verknüpft und weiterverarbeitet, dass aus der Verknüpfung bereits die zur Bestimmung der Neigung notwendigen Informationen abgeleitet werden können. Insbesondere kann daraus die auf den Kameras erfasste Lage der Flüssigkeit bestimmt und wiederum in Relation zur Lage der Kameras gesetzt werden und aus diesen relativen Positionen auf die absolute Lage bzw. auf die Neigung des Sensors oder eines damit verbundenen Gerätes geschlossen werden. Für eine Bestimmung der Neigung für eine einzelne Achse genügt das Vorhandensein von nur einer Kamera, deren Signal für eine Ableitung der Neigung herangezogen wird.

Zur Bestimmung der erwähnten relativen Positionen von Kameras zu Flüssigkeitsoberfläche kann aus den erfassten Bildern der Kameras eine Fläche abgeleitet werden, die wiederum zumindest Teile der Grenzschicht der Flüssigkeit in jener Lage repräsentiert, in welcher die Bilder aufgenommen wurden, wobei die Kameras bei der Aufnahme aus unterschiedlichen Blickwinkeln auf die Grenzfläche gerichtet waren.

Zur Ableitung der Fläche werden die Abbildungen auf den Kameras erfasst und auf diesen insbesondere in einzelne Bildpunkte aufgelöst. Je höher die mögliche Auflösung der Kameras hierbei ist, d.h. je mehr Bildpunkte pro Flächeneinheit aufgenommen werden können, desto genauer kann die darauf aufbauende Ableitung einer Fläche vorgenommen werden. Die aufgelösten Bilder werden nun so in Signale umgewandelt, dass diese jeweils eine erfasste Grenzlinie als zweidimensionale Punktwolke repräsentieren und in jedem Signal derartige Informationen enthalten sind, die für jede Kamera ein Abbild der vorher aufgenommenen Grenzlinie der Flüssigkeit rekonstruierbar machen. Dies kann durch Verwendung von unterschiedlichen Methoden der Ausgleichsrechnung, z.B. mit der Methode der "kleinsten Fehlerquadrate", realisiert werden, indem z.B. zu jeder erzeugten Punktwolke eine Ausgleichskurve berechnet wird und aus mindestens zwei dieser Kurven wiederum eine entsprechende Fläche abgeleitet wird. Je mehr Bildpunkte pro Flächeneinheit für die Ableitung einer Kurve hier zur Verfügung stehen, desto genauer kann diese berechnet werden, denn für jeden Bildpunkt kann anhand seiner Koordinaten auf der Kamera eine quadratische Abweichung seiner Position zu einer fiktiven Kurve berechnet werden. Die Lage der Kurve kann anschliessend so lange angepasst werden, bis die Summe der quadratischen Abweichungen aller Bildpunkte einen Minimalwert erreicht. In dieser Lage repräsentiert die Kurve den Verlauf der Punktwolke bzw. der Grenzlinie am genauesten und eine daraus weiter berechnete Fläche repräsentiert den Oberflächenverlauf der Flüssigkeit sehr gut. Für die Genauigkeit dieser Flächenberechnung ist die Anzahl der dafür hinzugezogenen Kurven insofern relevant, dass durch jede zusätzliche Kurve die Fläche entsprechend der beschriebenen Vorgehensweise weiter ausgeglichen werden kann.

Eine alternative Methode zur Flächenbestimmung kann das direkte Ableiten - ebenfalls durch Ausgleichsrechnung - dieser aus den Punktwolken von mindestens zwei oder mehreren Kameras sein, ohne dafür eine vorangehende Kurvenberechnung heranzuziehen. Hierzu werden direkt die von den zwei oder mehr Kameras zur Verfügung gestellten Punktwolken herangezogen und eine Fläche an diese alle Punkte angepasst. Für die Genauigkeit der Berechnung gilt auch hier, dass diese mit der Zunahme der Anzahl der in die Berechnung einfliessenden Informationen ansteigt. Die Bestimmung der Kurven oder Flächen kann auch dadurch erfolgen, dass mehrere Teilkurven oder -flächen berechnet werden und diese Teile Schrittweise zu einer Gesamtkurve bzw. -fläche zusammengeführt und/oder zu deren Ausrichtung verwendet werden.

Darüber hinaus kann die Grenzlinie der Flüssigkeitsoberfläche bei einer unscharfen Abbildung nicht durch eine weitgehend einer Linie entsprechenden Punktfolge sondern vielmehr durch eine ausgedehnte Fläche von gestreuten Bildpunkten repräsentiert werden, die keine scharfe Kontur aufweist. Aus solch einer Unschärfe einer Abbildung, die z.B. bei der Erfassung durch die Kamera verursacht werden kann, kann der Grenzlinienverlauf anhand der statistischen Verteilung der aufgelösten Bildpunkte der Punktwolke abgeleitet und so eine Berechnung von Kurven und Fläche vorgenommen werden. Insofern ist unter Abbild nicht notwendigerweise die Erzeugung eines optisch scharfen Bildes zu verstehen sondern die von einem Detektor erfassund auswertbare Projektion.

Zusätzlich kann ein Entstehen von Störungen, wie z.B. Schaum, Blasenbildung, Verunreinigungen oder aufgrund von Vibrationen, an der Flüssigkeitsoberfläche eine optisch scharfe Abbildung einer Grenzlinie verhindern. Dadurch kann der Verlauf der Grenzlinie nicht mehr eindeutig bestimmt und vielmehr nur eine diffuse Fläche auf der Kamera abgebildet werden, aus welcher ebenfalls durch die statistischen Verteilung der aufgelösten Bildpunkte der Punktwolke der Grenzlinienverlauf abgeleitet und so eine Berechnung von Kurven und Fläche vorgenommen werden kann. Insbesondere kann eine derartige Schaumbildung zur Kompensation von Unregelmässigkeiten bzw. von Krümmungen im Grenzlinienverlauf beitragen, wobei durch diese Verbreiterung der Grenzlinie z.B. Wellenbildung oder Benetzungseffekte im Flüssigkeitsverlauf bereits zumindest teilweise ausgeglichen oder Verunreinigungen in der Flüssigkeit überdeckt werden können.

Mit zunehmender Miniaturisierung des Neigungssensors wirken sich gleichzeitig Benetzungseffekte, die am Rand des Flüssigkeitsbehälters auftreten können, stärker auf den erfassten Teil des Verlaufs der Grenzlinie aus und können für sehr kleine Ausführungsformen des Sensors die Ausbildung eines zumindest teilweisen geraden Grenzlinienverlaufs dominieren, insbesondere gänzlich verhindern. Zeigen aufgenommene Bilder einer Kamera für grosse Behältnisse einen nahezu ebenen, horizontierten Verlauf einer Flüssigkeitsoberfläche, so wird in diesem Fall keine Gerade mehr, sondern eine gekrümmte Linie projiziert. Für eine korrekte Flächen- und Neigungsbestimmung müssen durch diese Effekte entstehende Krümmungen der Flüssigkeitsoberfläche somit mitberücksichtigt werden.

Eine Kurven- und/oder Flächenbestimmung kann hierzu alternativ derart vorgenommen werden, dass zur Berechnung Modelle herangezogen, die den Verlauf einer Flüssigkeitsoberfläche und das Benetzungsverhalten einer Flüssigkeit an einer Oberfläche, insbesondere den Verlauf eines an einer Gefässoberfläche entstehenden Meniskus, beschreiben. Dadurch kann eine Kurve bzw. eine Fläche bestimmt werden, die den Verlauf der Flüssigkeitsoberfläche so repräsentiert, dass auftretende Benetzungseffekte berücksichtigt sind und eventuell auftretende Krümmungen, insbesondere am Randbereich, durch den Kurvenverlauf dargestellt sind. Ein entsprechendes Modell kann weiterhin dafür verwendet werden, aus der Punktwolke, die eine gekrümmte Kurve oder Fläche repräsentiert, einen Kurven-oder Flächenverlauf direkt so zu bestimmen, dass dieser einer Geraden oder Ebene entspricht, so dass eine Meniskuskorrektur als rechnerische Beseitigung der durch den Meniskus zumindest im Randbereich gegebenen Krümmungseinflüsse folgt. Dazu erfolgt z.B. ein Ausgleichen der Kurven oder der Flächen an deren Rändern derart, dass vorhandene Krümmungen modellbasiert gerade gerechnet werden und die Wirkung einer Benetzung auf diese Weise herausgerechnet wird bzw. so der Verlauf der berechneten Kurven oder Flächen einem geraden oder ebenmässigen Verlauf angepasst wird. Ein Geraderechnen des Verlaufes kann auch statistisch erfolgen, indem für die Punkte bzw. für Punktgruppen, insbesondere für Punkte in jenen Bereichen in welchen eine gekrümmte Linie vorliegt, eine Steigung z.B. durch die Bestimmung einer Ausgleichsgeraden mit der Methode der "kleinsten Fehlerquadrate" berechnet wird und die Lage der Punkte anhand der Steigung korrigiert wird. Es kann weiter eine stückweise lineare Approximation des Grenzlinienverlaufs erfolgen, indem z.B. Teilgeraden zu Punktgruppen bestimmt werden, sodass anhand der Steigung der Teilgeraden eine Korrektur des Grenzlinienverlaufs hin zu einer Geraden erfolgen kann oder auch Teilgeraden zusammengefasst werden können und die Steigungen dieser Geraden wiederum für die Korrektur des Grenzlinienverlaufs hergezogen werden können. Für diese Berechnungen und zur Bildung von Punktgruppen kann zusätzlich ein Schwellwert für die Steigungsunterschiede von Geraden berücksichtigt werden.

Durch das Geraderechnen des Linien- bzw. Flächenverlaufs anhand von Modellen oder durch statistische Berechnungen kann aus den aufgenommenen Punktwolken direkt - oder durch das Heranziehen daraus berechneter Geraden - eine Ebene berechnet werden, mit welcher weitere Schritte, insbesondere die Berechnung eines Normalenvektors zur Ebene, zur Bestimmung einer Neigung vorgenommen werden können.

Werden hingegen Flächen direkt aus Punktwolken oder aus Kurven, die aus Punktwolken abgeleitet sind, ohne eine weitere Korrektur der Krümmung berechnet, so kann für die weitere Bestimmung der Neigung eine Berechnung einer approximierten Tangentialebene zu den Flächen erfolgen, auf deren Basis wiederum weitere Berechnungsschritte erfolgen können.

Zur Bestimmung der Tangentialebene können unterschiedliche Methoden angewendet werden. Insbesondere kann im Flächenverlauf nach Extremwerten, je nach Orientierung des Sensors insbesondere nach Minima oder Maxima, gesucht werden und an die Position gefundener Extrema eine Ebene konstruiert werden, die die Fläche berührt bzw. tangiert. Darüber hinaus kann eine Ebene derart berechnet werden, dass diese eine maximale Anzahl von Berührpunkten zu der vorab berechneten Fläche aufweist und so für Flächenverläufe, deren Krümmung unterschiedlich stark über die gesamte Oberfläche ausgeprägt ist, mit dieser Möglichkeit eine horizontal ausgerichtete Ebene erzeugt werden.

Eine Tangentialebene kann weiterhin auch direkt aus einer Punktwolke berechnet werden, ohne dass hierfür bereits berechnete Flächen oder Kurven herangezogen werden müssen. Z.B. kann eine Verteilung der Bildpunkte einer Punktwolke betrachtet werden und aus dieser Verteilung eine Ebene derart angepasst werden, dass eine Horizontierung durch eine Gewichtung oder Korrektur der Position einzelner Punkte gelingt. Hierzu können wiederum Ausgleichsgeraden für Punktepaare bzw. für mehrere Punkte der Punktwolke berechnet werden und anhand der Steigung dieser Geraden die Position von Punkten, insbesondere in Bereichen, in denen eine abgebildete Grenzlinie nicht gerade verläuft, so korrigiert werden, dass die Punkte nach der Korrektur eine Tangentialebene an die Punktwolke beschreiben.

Ebensolche Modelle können weiters zur direkten Bestimmung eines Normalenvektors, der parallel zum Schwerefeld gerichtet ist, aus einer Punktwolke verwendet werden. Auch mit Hilfe bereits genannter statistische Methoden kann dieses direkte Ableiten eines Normalenvektors durchgeführt werden, indem insbesondere Richtungsbeiträge zu jedem Punkt und/oder zu Punktgruppen der Punktwolke, insbesondere durch eine Steigungsbestimmung, bestimmt und einem Vektor zugeordnet werden. Hierzu können zusätzlich Bereiche mit Anhäufungen von Punkten stärker berücksichtigt werden als Bereiche, die eine dazu relativ kleine Anzahl von Punkten aufweisen.

Ein Normalenvektor kann alternativ dazu auf Basis einer vorher bestimmten Tangentialebene mathematisch bestimmt werden, wobei dieser damit stets senkrecht auf der Ebene steht. Hat man eine berechnete Tangentialebene vorliegen und damit die Bedingung erfüllt, dass diese Ebene eine horizontierte Ausrichtung hat, so zeigt der Normalenvektor, in Richtung des Schwerefeldes der Erde. Die relative Lage des Vektors bezüglich der Kameras bzw. der Detektoren kann nach diesem Berechnungsschritt als bekannt oder mathematisch genau bestimmbar betrachtet werden. Durch ein Ableiten der Koordinaten des Vektors und in Bezug setzen zu den jeweiligen Detektoren kann deren Lage bezüglich der Horizontalen ermittelt werden. Mit dieser gemeinsamen Vorgehensweise für mindestens zwei Detektoren lässt sich die Ausrichtung des Neigungssensors oder eines Gerätes, in welches dieser Sensor integriert ist, gemeinsam für zwei Achsen und damit absolut bestimmen. Diesem Ablauf entsprechend kann die Bestimmung der Neigung für nur eine Achse unter Verwendung eines einzelnen Detektors geschehen. Neben dieser Art der Neigungsbestimmung kann alternativ oder auch ergänzend dazu die Neigung durch einen Vergleich zweier Vektoren abgeleitet werden. Hierfür können für den Sensor oder für ein diesen Sensor aufweisendes Gerät in einer horizontalen Ausrichtung die Koordinaten eines Referenzvektors, der ebenfalls eine Normale zur Flüssigkeit anzeigt, definiert werden. Zur Bestimmung der Neigung kann wiederum ein wie oben abgeleiteter Normalenvektor herangezogen werden, dessen berechnete Richtung mit derjenigen des Referenzvektors verglichen wird. Aus einem sich daraus evtl. ergebenden Richtungsunterschied kann direkt die Neigung des Sensors in jede beliebige Raumrichtung ermittelt werden.

Zu den berechneten Kurven, Flächen, Geraden bzw. Ebenen kann zusätzlich ein Gütewert ermittelt werden, der z.B. anzeigt mit welcher Genauigkeit die Berechnung erfolgt ist und wie gross eine mögliche Unsicherheit dieser Genauigkeit ist. Diese Grösse kann dazu dienen, einem Benutzer eines Gerätes mit Neigungssensor die Genauigkeit oder Richtigkeit einer durchgeführten Messung mitteilbar zu machen. Darüber hinaus kann der berechnete Gütewert dazu verwendet werden einzelne Steuerungsparameter des Neigungssensors automatisch oder manuell anzupassen. Z.B. kann aufgrund eines schlechten Gütewertes die Intensität der Beleuchtung des Mediums oder die Sensitivität eines Detektors verändert werden, damit bei einer Folgemessung die Projektion auf einen Detektor z.B. kontrastreicher erfasst werden kann.

Zusätzlich kann die Genauigkeit der Neigungsbestimmung dadurch erhöht werden, dass das Erfassen und Umwandeln der Signale kontinuierlich erfolgt und insbesondere die Signale in der Auswerteeinheit kumuliert werden. Aus den kumulierten Signalen können dann wiederum wie beschrieben Kurven, Flächen, Geraden, Ebenen und der Normalenvektor abgeleitet werden. Verharrt ein Messgerät mit einem erfindungsgemässen Neigungssensor z.B. in einer definierten Position, können durch das Anhäufen von Signalen Mittelwerte zu den Signalen ermittelt werden oder Bereiche in einer zu einem Signal gehörenden Punktwolke definiert werden, die z.B. eine Konzentration von Punkten ausweisen. Unter Verwendung der Mittelwerte oder durch Gewichten der Punktkonzentrationen können dann kontinuierlich und mit zunehmender Genauigkeit Kurven, Flächen, Geraden bzw. Ebenen abgeleitet werden.

Ein zusätzlicher Aspekt der Erfindung - der Benetzungseffekt der Flüssigkeit am Rand des Behälters - wird durch eine weitere erfindungsgemässe Ausführung berücksichtigt. Ein Neigungssensor für ein Gerät weist hierfür einen ein fliessfähiges Medium aufnehmenden Behälter auf, wobei die Lage des Mediums relativ zum Behälter neigungsabhängig ist und der Behälter eine eckige, insbesondere dreieckige, oder eine elliptische, insbesondere kreisförmige, Grundfläche aufweisen kann. Weiter sind eine Quelle elektromagnetischer Strahlung zur Erzeugung von Projektionen wenigstens eines Teils einer Grenzfläche des Mediums und wenigstens zwei Detektoren zur Erfassung von jeweils einer der Projektionen und zur Umwandlung in Signale, wobei die Detektoren jeweils eine Erfassungsrichtung aufweisen und die Erfassungsrichtungen der Detektoren zueinander gewinkelt angeordnet sind, vorgesehen. Zusätzlich ist eine Auswerteeinheit zur Bestimmung der Neigung in zwei Achsen aus den Signalen der wenigstens zwei Detektoren vorhanden. Die Neigung wird aus der Verknüpfung der Signale für die zwei Achsen gemeinsam bestimmt, wobei eine Fläche, insbesondere eine gekrümmte Fläche, aus Punktwolken abgeleitet wird.

Ein entsprechendes Verfahren zur Bestimmung der Neigung eines Gerätes, mit einem fließfähigen Medium, dessen Lage relativ zu einem dieses aufnehmenden Behälter neigungsabhängig ist, weist ein Erzeugen von wenigstens zwei Projektionen wenigstens eines, insbesondere eines gemeinsamen Teils einer Grenzfläche des Mediums auf. Weiter ist ein Erfassen der jeweiligen Projektion durch einen jeweils zugeordneten von wenigstens zwei Detektoren und Umwandeln der jeweils erfassten Projektion in Signale, wobei die Grenzfläche aus zwei zueinander gewinkelten Erfassungsrichtungen erfasst wird, und ein Bestimmen der Neigung aus den Signalen vorgesehen. Aus einer Verknüpfung der Signale wird die Neigung in zwei Achsen gemeinsam bestimmt, wobei beim Bestimmen der Neigung die Signale derart verknüpft werden, dass aus diesen eine Fläche, insbesondere eine gekrümmte Fläche, bestimmt wird, wobei die Fläche die Grenzfläche des Mediums repräsentiert, insbesondere einen Verlauf der Grenzfläche approximiert.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform eines erfindungsgemässen Neigungssensor mit dreieckiger Grundfläche;
- Fig. 2: eine zweite Ausführungsform des Neigungssensors in Seitenansicht;
- Fig. 3: eine dritte Ausführungsform des Neigungssensors mit schrägen Behälterwänden in Seitenansicht;
- Fig. 4a: eine perspektivische Darstellung einer vierten Ausführungsform eines erfindungsgemässen Neigungssensors in geneigtem Zustand;
- Fig. 4b: die Detektoren eines erfindungsgemässen Neigungssensors mit einer errechneten Fläche;
- Fig. 4c: eine abgeleitete Fläche mit einem dazugehörigen Normalenvektor;
- Fig. 5a-b: die Seitenansicht einer fünften Ausführungsform des erfindungsgemässen Neigungssensors in geneigtem Zustand;
- Fig. 6a-b: vier Ausführungen eines Behälters mit Detektoren für einen erfindungsgemässen Neigungssensor;
- Fig. 7a: eine Draufsicht auf eine sechsten Ausführungsform des erfindungsgemässen Neigungssensors;
- Fig. 7b: eine siebte Ausführungsform des erfindungsgemässen Neigungssensors mit runder Grundfläche in Draufsicht;
- Fig. 7c: eine Draufsicht auf eine achte Ausführungsform des erfindungsgemässen Neigungssensors mit fünfeckiger Grundfläche;
- Fig. 8a-b: ein als Totalstation ausgebildetes geodätisches Vermessungsgerät mit einem erfindungsgemässen Neigungssensor;
- Fig. 9: eine Koordinatenmessmaschine mit einem erfindungsgemässen Neigungssensor.

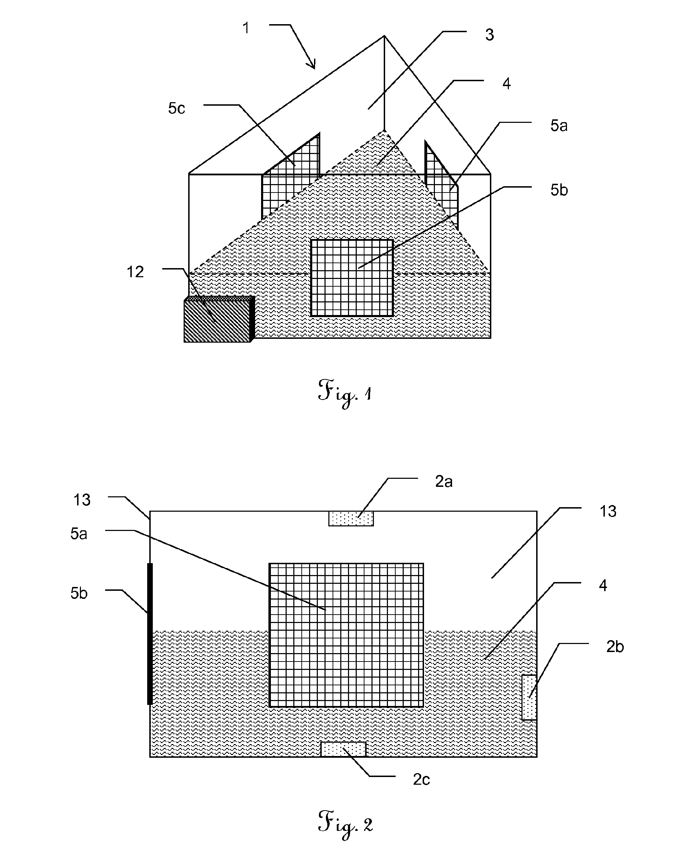

Figur 1 zeigt einen erfindungsgemässen Neigungssensor 1 zur Bestimmung der Neigung eines Geräts in zwei Achsen. Der Neigungssensor 1 weist einen Behälter 3 mit einer dreieckigen Grundfläche auf, wobei die Behälterwände senkrecht auf der Grundfläche stehen und an diesen Wänden die Detektoren 5a, 5b, 5c zur Erfassung von jeweils einer Projektion und zur Umwandlung in Signale angeordnet sind. Der Behälter 3 ist dabei teilweise mit einem fliessfähigem Medium 4, das relativ zum Behälter 3 neigungsabhängig ist, befüllt, so dass die Detektoren 5a, 5b, 5c in einer horizontierten Ausrichtung zumindest teilweise von dem Medium 4 bedeckt sind und erzeugte Projektionen von wenigstens einem Teil der Grenzfläche des Mediums 4 erfassen können. Eine Auswerteeinheit 12 ist dafür vorgesehen, die Neigung des Sensors 1 in zwei Achsen aus den Signalen der Detektoren 5a, 5b, 5c, die bezüglich ihrer Erfassungsrichtungen gewinkelt zueinander angeordnet sind, zu bestimmen, wobei die Neigung aus der Verknüpfung der Signale für die zwei Achsen gemeinsam bestimmt werden kann.

Figur 2 zeigt eine zweite Ausführungsform des Neigungssensors 1 in einer Seitenansicht. Die beiden Detektoren 5a, 5b sind zentral an der jeweiligen Behälterwand 13 angeordnet und dabei teilweise von dem Medium 4 bedeckt. Zusätzlich sind Quellen elektromagnetischer Strahlung 2a, 2b, 2c so angeordnet, dass sie Projektionen wenigstens eines Teils der Grenzfläche des Mediums 4 auf den Detektoren 5a, 5b erzeugen.

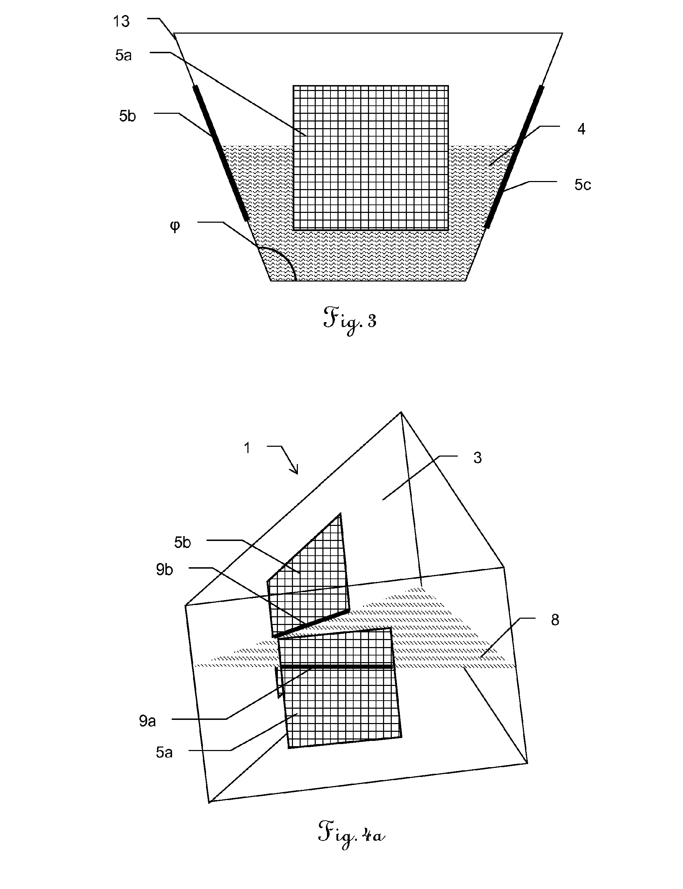

Figur 3 zeigt eine dritte Ausführungsform des Neigungssensors 1 in einer Seitenansicht. Die Detektoren 5a, 5b, 5c sind zentral an der jeweiligen Behälterwand 13 angeordnet und dabei teilweise von dem Medium 4 bedeckt. Im Unterschied zur vorangehenden Ausführung stehen die Behälterwände 13 hier nicht senkrecht auf der Grundfläche des Behälters, sondern sind in einem Winkels ϕ zu dieser angeordnet.

Figur 4a zeigt eine perspektivische Ansicht einer vierten Ausführungsform des Neigungssensors 1 in einem geneigten Zustand. Der Behälter 3 weist hierbei eine dreieckige Grundfläche und zwei Detektoren 5a, 5b, die jeweils an den Behälterwänden angeordnet sind, auf, wobei die Grenzfläche 8 des fliessfähigen Mediums dabei so im Behälter 3 vorliegt, dass auf den Detektoren jeweils erzeugte Projektionen 9a, 9b des Mediums erfasst werden können.

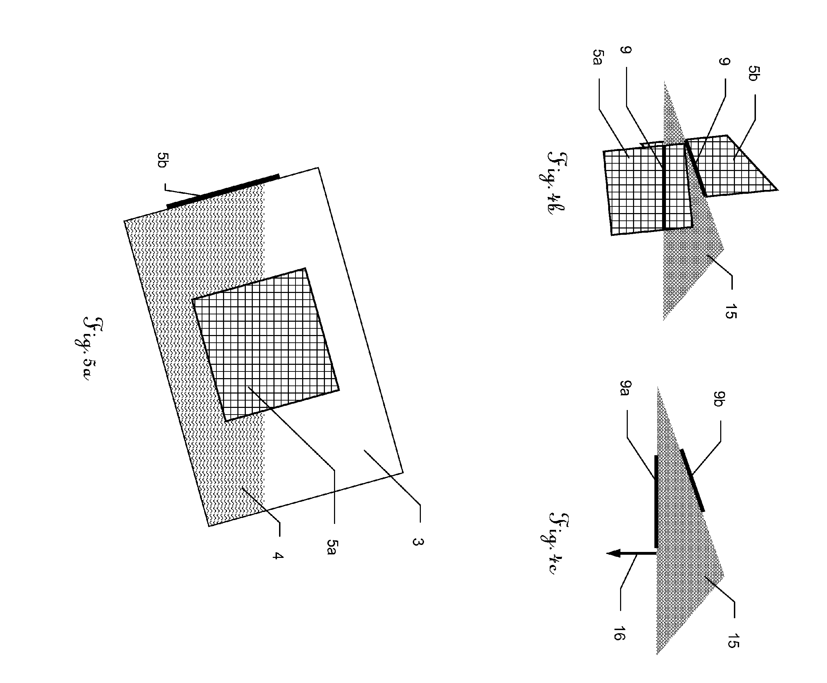

In Figur 4b sind die Detektoren 5a, 5b, die als Flächensensoren ausgeführt sind, aus Figur 4a ebenfalls in dem voran beschriebenen geneigtem Zustand dargestellt. Auf den Detektoren 5a, 5b sind jeweils die an der Grenzfläche des Mediums entstandenen Projektionen 9a, 9b vorhanden, welche in Signale umgewandelt werden. Weiters können diese Signale verknüpft werden, indem aus ihnen eine Fläche 15 bestimmt wird, wobei diese wiederum die Grenzfläche des Mediums repräsentiert, insbesondere den Verlauf der Grenzfläche approximiert. Die Projektionen werden darüber hinaus durch den jeweiligen Detektor 5a, 5b in Bildpunkte aufgelöst, so dass die Signale die Grenzfläche als zweidimensionale Punktwolke repräsentieren. Die Fläche 15 kann aus den Punktwolken der Detektoren 5a, 5b direkt, insbesondere durch Ausgleichsrechnung, abgeleitet werden. Neben der Bestimmung einer Fläche 15 kann aus den Punktwolken auch jeweils eine Kurve abgeleitet werden, wobei dieses Ableiten ebenfalls durch Ausgleichsrechnung realisiert werden kann. Weiters kann aus den Punktwolken ein Gütewert für die Berechnung der Fläche 15 und/oder der Kurven ermittelt werden und insbesondere ein Parameter, z.B. eine Beleuchtungsintensität, für das Erzeugen der wenigstens zwei Projektionen angepasst werden.

Figur 4c zeigt überdies einen beim Bestimmen der Neigung berechneten Normalenvektor 16 zu der abgeleiteten Fläche 15. Anhand dieses Vektors 16 kann eine Neigung des Sensors 1 in zwei Achsen durch die relative Lage des Normalenvektors 16 zu den Detektoren 5a, 5b, d.h. durch einen Vergleich der Lage des Vektors 16 mit der Lage der Detektoren 5a, 5b, bestimmt werden. Ausserdem kann die Neigung des Sensors 1 dadurch bestimmt werden, dass ein Referenzvektor für eine horizontierte Ausrichtung des Sensors 1 definiert wird und die Neigung durch Vergleichen der Lage des berechneten Normalenvektors zum Referenzvektor abgeleitet wird.

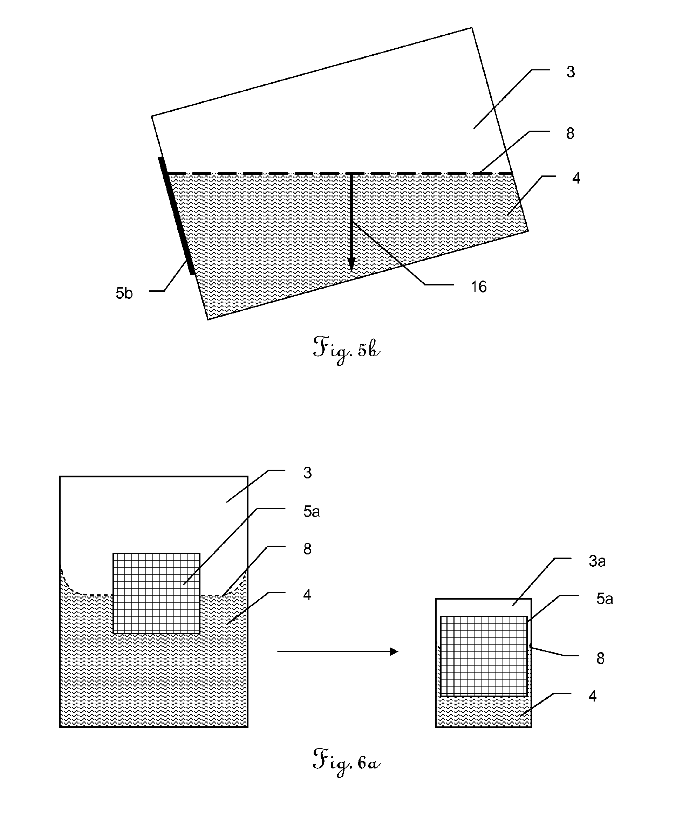

Zur Verdeutlichung zeigen die Figuren 5a und 5b einen Sensor ähnlich demjenigen aus Figur 2, jedoch ohne die Quellen elektromagnetischer Strahlung, in einem geneigten Zustand. Das Medium 4 weist eine horizontierte Ausrichtung entsprechend der Neigung des Sensors 1 und damit eine veränderte Ausrichtung relativ zum Behälter 3 und zu den Detektoren 5a, 5b auf. Die Detektoren 5a, 5b werden im gezeigten Zustand unterschiedlich stark vom Medium 4 bedeckt und erfassen dadurch im Vergleich zum horizontierten Zustand unterschiedliche Projektionen. In Figur 5b ist die Grenzfläche 8 des Mediums 4 und ein dazugehöriger Normalenvektor 16 dargestellt. Deutlich zu erkennen ist hier die Veränderung der relativen Lage dieses Vektors 16 zum Detektor 5b, d.h. die Richtung des Vektors ist in diesem Zustand nicht mehr parallel zum Detektor 5b, bzw. nicht mehr senkrecht zu dessen Erfassungsrichtung. Durch einen Vergleich der Richtung des Vektors 16 mit der Lage des Detektors 5b lässt sich so die Neigung des Sensors 1 in eine Achse ableiten. Dieser Vergleich kann gemeinsam für weitere Detektoren und damit für mindestens eine zweite Achse vorgenommen und daraus die Neigung gemeinsam für zwei Achsen bestimmt werden. Das Erfassen und Umwandeln der Projektionen in Signale und das Bestimmen der Neigung kann zudem kontinuierlich, insbesondere mit einer Kumulation erfasster Signale, erfolgen.

Figur 6a zeigt zwei Ausführungsformen eines Behälters 3, 3a für einen Neigungssensor, die sich hinsichtlich ihrer Grösse wesentlich voneinander unterscheiden. Die Grenzfläche 8 des Mediums 4 zeigt am Rand des Behälters 3, 3a einen gekrümmten Verlauf, welcher auf einer Benetzung des Behälters 3, 3a durch das Medium 4 beruht. Dieser Effekt wirkt sich mit einer zunehmenden Miniaturisierung des Behälters 3 verstärkt auf den Verlauf der Grenzfläche 8 aus, und kann für kleine Ausführungsformen des Behälters 3a die Ausbildung eines zumindest teilweise geraden Grenzlinienverlaufs des Mediums 4 verhältnismässig dominieren, insbesondere komplett verhindern. Dadurch nimmt für gleich bleibende Detektorgrössen der Anteil an gekrümmten Grenzlinienverläufen, die auf die Detektoren 5a projiziert werden, ebenfalls zu und muss für die Bestimmung der Neigung berücksichtigt werden.

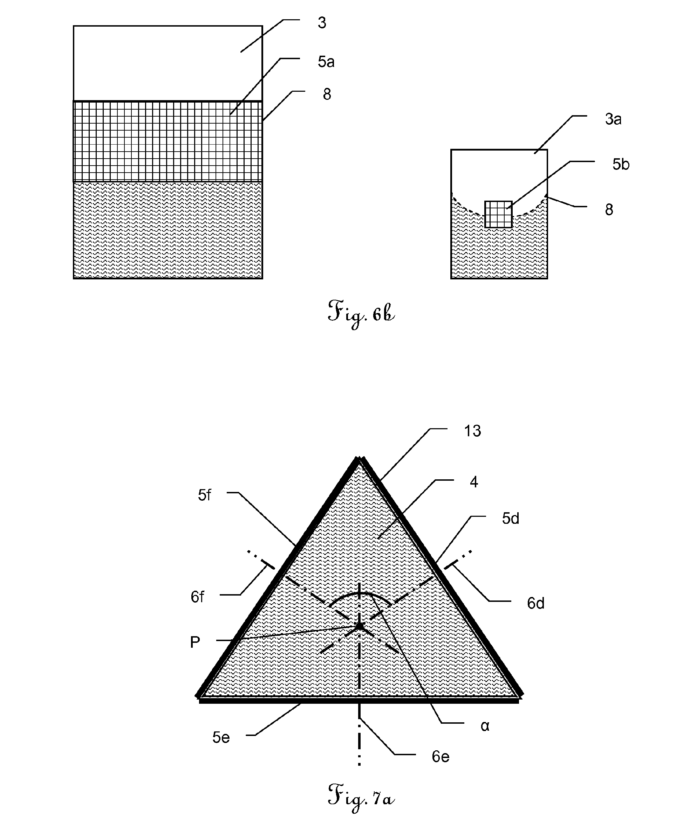

Wie in Figur 6b gezeigt kann die Dimensionierung der Detektoren 5a, 5b angepasst werden. Zur Steigerung der Genauigkeit bei der Bestimmung der Neigung kann der Detektor 5a in seiner Grösse an die Abmessungen des Behälters 3 angepasst werden und sein Sichtfeld damit optimiert werden. Dadurch kann z.B. ein verhältnismässig grosser Bereich mit einem ebenmässigen Verlauf der Grenzfläche 8 erfasst werden. Für den Behälter 3a hingegen kann ein verkleinerter Detektor 5b vorgesehen sein um z.B. Projektionen von stark gekrümmten Grenzlinien in Randbereichen ausblenden zu können.

Figuren 7a bis 7c zeigen jeweils eine Draufsicht eines erfindungsgemässen Neigungssensors 1 senkrecht zur Grundfläche des Sensors. In Figur 7a weist die Ausführungsform des Neigungssensors 1 einen Behälter mit einer dreieckigen Grundfläche und mit Behälterwänden 13, die senkrecht auf dieser Grundfläche stehen, auf, wobei das Medium 4 einen Teil des Volumens des Behälters einnimmt. Die drei Detektoren 5d, 5e, 5f sind hier derart ausgeführt, dass sie den Behälterwänden 3 in ihrer Dimensionierung entsprechen, deren gesamte Fläche bedecken und dass dabei jeder Detektor 5d, 5e, 5f eine Erfassungsrichtung 6d, 6e, 6f definiert, wobei sich diese in einem Punkt P, insbesondere sich innerhalb des Behälters in definierter Höhe über dem Flächenschwerpunkt der Grundfläche, überschneiden. Die Detektor 5d, 5e, 5f sind weiterhin in einem Winkel α bezüglich ihrer Erfassungsrichtungen 6d, 6e, 6f zueinander angeordnet, so dass der Detektor 5f mit seiner Erfassungsrichtung 6f in der von den Erfassungsrichtungen 6d, 6e aufgespannten Ebene liegt.

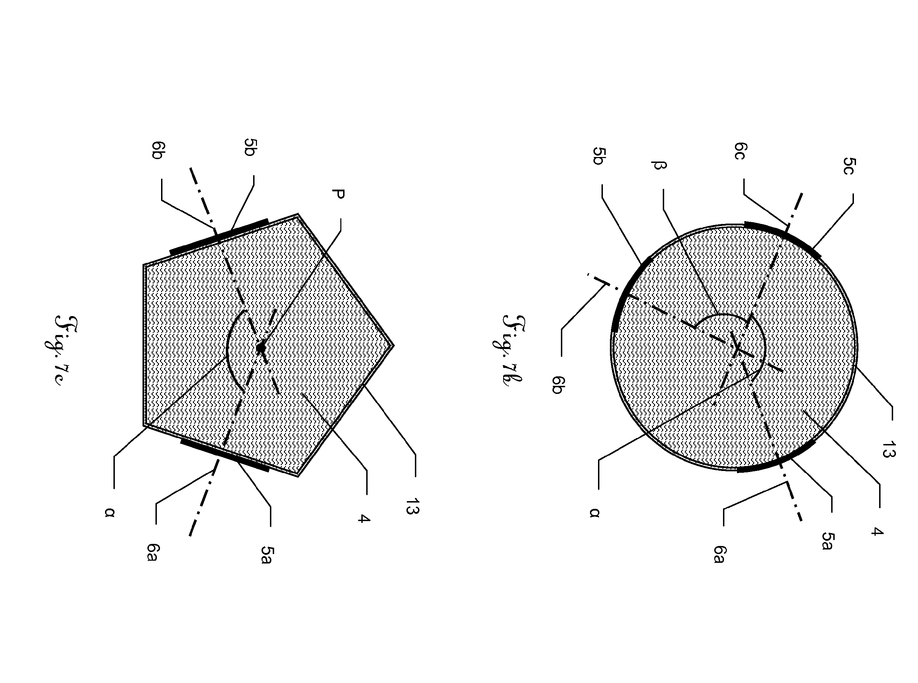

Figur 7b zeigt eine weitere Ausführungsform eines erfindungsgemässen Neigungssensors 1, wobei dieser mit einer runden Grundfläche ausgeführt ist und die Behälterwand 13 wiederum senkrecht auf dieser Fläche steht.

Auch in dieser Ausführung ist der Behälter teilweise mit einem Medium 4 befüllt und die Detektoren 5a, 5b, 5c sind an der Behälterwand 13 derart angeordnet, dass ihre Erfassungsrichtungen 6a, 6b, 6c sich in einem Punkt schneiden. Überdies weisen die Detektoren 5a, 5b, 5c jeweils Formen auf, die der Form, hier insbesondere der Krümmung, der Behälterwand entsprechen. Dadurch kann in dieser Anordnung eine genaue und gute Projektion der Grenzfläche des Mediums 4 auf die Detektoren 5a, 5b, 5c erfasst werden. Die Detektoren 5a, 5b, 5c sind in diesem Ausführungsbeispiel mit unterschiedlichen Winkelabständen über die Behälterwand verteilt. So ergeben sich zwischen den Erfassungsrichtungen 6a, 6b, 6c unterschiedliche Winkel α und β, jedoch können weitere Ausführungsvarianten dieses Sensors 1 gleichgrosse Winkel α, β zwischen den Erfassungsrichtungen 6a, 6b, 6c aufweisen. Darüber hinaus kann die Erfassungsrichtung 6c von einem der Detektoren 5c in einem Winkel zu einer von den beiden anderen Detektoren 5a, 5b aufgespannten Ebene angeordnet sein.

Die in Figur 7b dargestellte Ausführungsform ist hierbei ein Sonderfall, da die Projektion der Flüssigkeitsoberfläche auf die Bildsensorik der Detektoren 5a, 5b, 5c ein Teilstück einer gekrümmten Linie ergibt.

Figur 7c zeigt eine dritte Ausführungsform des Sensors. Geometrisch unterscheidet sich diese Variante durch seine fünfeckige Grundfläche von den vorher aufgeführten Ausführungen. Die Behälterwände 13 stehen auch hier senkrecht auf der Grundfläche und das Medium 4 füllt den Behälter teilweise. Zusätzlich sind zwei Detektoren 5a, 5b so angeordnet, dass ihre Erfassungsrichtungen 6a, 6b sich im Inneren des Behälters unter einem Winkel α in einem Punkt P überschneiden. Einer oder beide der Detektoren können dabei als Liniendetektoren ausgeführt sein, wobei ihre Erfassungsrichtungen 6a, 6b parallel zur Grundfläche ausgerichtet sein können. Die Wände 13 des Behälters sind weiterhin transparent ausgeführt, wobei die beiden Detektoren 5a, 5b sich auf der Aussenseite der Behälterwände 13 befinden, so dass das Erfassen von entstehenden Projektionen erfolgt, nachdem diese die transparenten Wände 13 passiert haben.

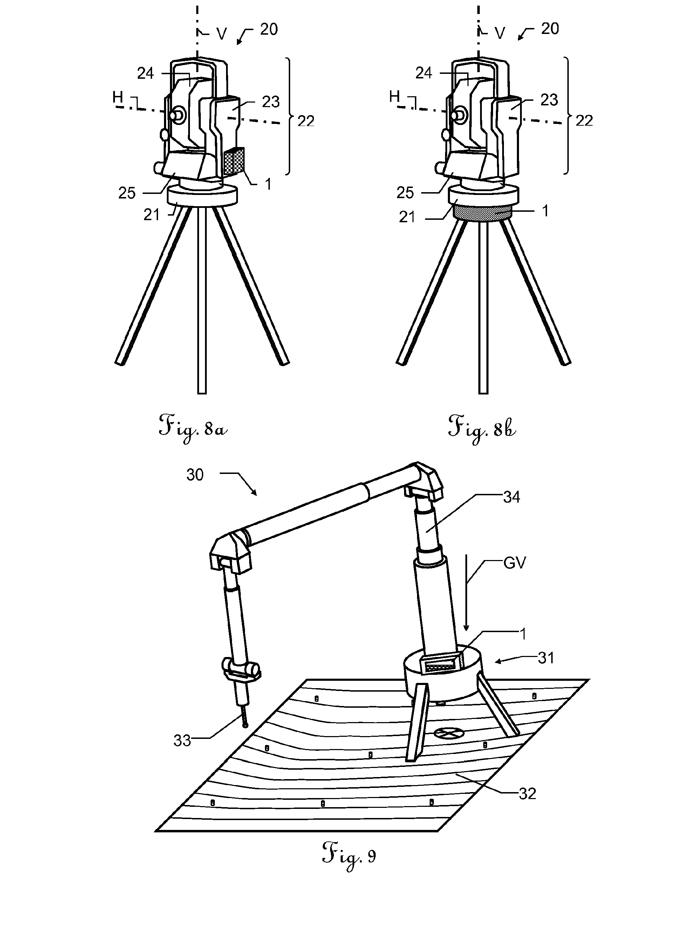

Die Figuren 8a und 8b zeigen jeweils ein als Totalstation ausgebildetes geodätisches Vermessungsgerät 20 zur Messung von Horizontalwinkeln, Vertikalwinkeln und Distanzen zu einem beabstandeten Zielobjekt.

Die Totalstation ist auf einem Stativ angeordnet, wobei eine Basis 21 der Totalstation direkt und fest mit dem Stativ verbunden ist. Der Hauptkörper der Totalstation, der auch als Oberteil 22 bezeichnet wird, ist relativ zur Basis 21 um eine vertikale Stehachse V drehbar. Das Oberteil 22 weist dabei eine - z.B. durch zwei Säulen gebildete - Stütze 23, eine zwischen den Säulen um die horizontale Kippachse H drehbar gelagerte Visiereinrichtung 24 sowie eine elektronische Anzeige-Steuereinheit 25 auf. Die Anzeige-Steuereinheit 25 kann in bekannter Weise zur Steuerung des Vermessungsgeräts 20 sowie zur Verarbeitung, Anzeige und Speicherung von Messdaten ausgebildet sein. Zur Bestimmung der Ausrichtung der Totalstation ist zusätzlich ein erfindungsgemässer Neigungssensor 1 daran angeordnet. In jener Ausführung gezeigt in Figur 8a ist ein Sensor 1 beispielsweise seitlich an der Stütze 23 angebracht. Eine weitere beispielhafte Ausführungsform einer Totalstation mit einem Neigungssensor 1 ist in Figur 8b dargestellt. Der Neigungssensor 1 befindet sich hier unterhalb der Basis 21 des Vermessungsgerätes 20. In beiden Ausführungen können die aus dem Neigungssensor 1 bereitgestellten Daten mit den Winkel- und Abstandsmessdaten der Totalstation kombiniert und weiterverarbeitet werden. Diese erfassten Messdaten werden der Anzeige-Steuereinheit 25 zugeführt und von dieser verarbeitet, so dass die Position des Zielpunkts relativ zur Totalstation durch die Anzeige-Steuereinheit 25 ermittelbar, optisch anzeigbar und speicherbar ist.

Figur 9 zeigt eine Koordinatenmessmaschine 30 mit einer Basis 31 und einem erfindungsgemässen Neigungssensor 1 zur Messung der Neigung dieser Basis 31 relativ zum Gravitationsvektor GV. Der Untergrund 32, auf welchem die Messmaschine 30 steht, ist relativ zur Horizontalen geneigt, so dass diese nicht horizontiert ausgerichtet ist. Durch das erfindungsgemässe Bestimmen der exakten Neigung der Basis 31 relativ zum Gravitationsvektor GV oder relativ zur Horizontalen kann diese Neigung in die Berechnung von Koordinaten von Punkten, die mit einem Tast-Glied 33, das wiederum am Ende eines Gelenkarmes 34 angeordnet ist, gemessen werden, einfliessen und zur Positionskorrektur bei der Berechnung herangezogen werden.

## Patentansprüche

1. Neigungssensor (1) für ein Gerät, mit
● einem ein fliessfähiges Medium (4) aufnehmenden Behälter (3), wobei die Lage des Mediums (4) relativ zum Behälter (3) neigungsabhängig ist und der Behälter (3) eine eckige, insbesondere dreieckige, oder eine elliptische, insbesondere kreisförmige, Grundfläche aufweist,
● einer Quelle elektromagnetischer
Strahlung (2a, 2b, 2c) zur Erzeugung von Projektionen (9a, 9b) wenigstens eines Teils einer Grenzfläche (8) des Mediums (4),
● wenigstens zwei Detektoren (5a, 5b, 5d, 5e) zur Erfassung von jeweils einer der Projektionen (9a, 9b) und zur Umwandlung in Signale, wobei die Detektoren (5a, 5b, 5d, 5e) jeweils eine Erfassungsrichtung (6a, 6b, 6d, 6e) aufweisen und die Erfassungsrichtungen (6a, 6b, 6d, 6e) der Detektoren (5a, 5b, 5d, 5e) zueinander gewinkelt angeordnet sind, und
● einer Auswerteeinheit (12) zur Bestimmung der Neigung in zwei Achsen aus den Signalen der wenigstens zwei Detektoren (5a, 5b, 5d, 5e) ,
**dadurch gekennzeichnet, dass**
die Neigungen für die zwei Achsen gemeinsam aus einer Verknüpfung der Signale bestimmt werden.

2. Neigungssensor nach Anspruch 1,
**dadurch gekennzeichnet, dass**
die Detektoren (5a, 5b, 5c, 5d, 5e, 5f) mit ihren Erfassungsrichtungen (6a, 6b, 6c, 6d, 6e, 6f) parallel zur Grundfläche angeordnet sind.

3. Neigungssensor nach einem der vorangehenden Ansprüche,
**dadurch gekennzeichnet, dass**
die Detektoren (5a, 5b, 5c, 5d, 5e, 5f) als Linien-oder Flächensensoren ausgeführt sind, insbesondere mit einer den Behälter (3) auskleidenden Dimensionierung.

4. Neigungssensor nach einem der vorangehenden Ansprüche,
**gekennzeichnet durch**
einen dritten Detektor (5f) dessen
Erfassungsrichtung (6f) in einer von den Erfassungsrichtungen (6d, 6e) der wenigstens zwei Detektoren (5d, 5e) gebildeten Ebene liegt.

5. Neigungssensor nach einem der vorangehenden Ansprüche 1 bis 3,
**gekennzeichnet durch**
einen dritten Detektor (5c), dessen
Erfassungsrichtung (6c) in einem Winkel zu einer von den Erfassungsrichtungen (6a, 6b) der wenigstens zwei Detektoren (5a, 5b) gebildeten Ebene orientiert ist.

6. Neigungssensor nach einem der vorangehenden Ansprüche,
**dadurch gekennzeichnet, dass**
die Detektoren (5a, 5b, 5c, 5d, 5e, 5f) so angeordnet sind, dass sich ihre
Erfassungsrichtungen (6a, 6b, 6c, 6d, 6e, 6f) in einem Punkt (P) überschneiden, insbesondere sich innerhalb des Behälters (3) in definierter Höhe über einem Flächenschwerpunkt der Grundfläche des Behälters (3) schneiden.

7. Verfahren zur Bestimmung der Neigung eines Gerätes, mit einem fließfähigen Medium (4), dessen Lage relativ zu einem dieses aufnehmenden Behälter (3) neigungsabhängig ist, mit einem
● Erzeugen von wenigstens zwei Projektionen (9a, 9b) wenigstens eines, insbesondere eines gemeinsamen Teils einer Grenzfläche (8) des Mediums (4),
● Erfassen der jeweiligen Projektion (9a, 9b) durch einen jeweils zugeordneten von wenigstens zwei Detektoren (5a, 5b, 5d, 5e) und Umwandeln der jeweils erfassten Projektion (9a, 9b) in Signale, wobei die Grenzfläche (8) aus zwei zueinander gewinkelten Erfassungsrichtungen (6a, 6b, 6d, 6e) erfasst wird, und
● Bestimmen der Neigung aus den Signalen,
**dadurch gekennzeichnet, dass**
die Neigungen für die zwei Achsen gemeinsam aus einer Verknüpfung der Signale bestimmt werden.

8. Verfahren nach Anspruch 7,
**dadurch gekennzeichnet, dass**
beim Bestimmen der Neigung die Signale verknüpft werden, indem aus diesen eine Fläche (15), insbesondere eine Ebene, bestimmt wird, wobei die Fläche (15) die Grenzfläche (8) des Mediums (4) repräsentiert, insbesondere einen Verlauf der Grenzfläche (8) approximiert.

9. Verfahren nach Anspruch 8,
**dadurch gekennzeichnet, dass**
beim Bestimmen der Neigung ein Normalenvektor (16) zur Fläche (15) berechnet wird und die Neigung in zwei Achsen anhand der relativen Lage des Normalenvektors (16) zu den
Detektoren (5a, 5b, 5c, 5d, 5e, 5f) bestimmt wird.

10. Verfahren nach einem Ansprüche 7 bis 9,
**dadurch gekennzeichnet, dass**
die Projektion (9a, 9b) durch den jeweiligen Detektor (5a, 5b, 5c, 5d, 5e, 5f) in Bildpunkte aufgelöst wird, so dass die Signale die Grenzfläche (8) als zweidimensionale Punktwolke repräsentieren.

11. Verfahren nach Anspruch 10,
**dadurch gekennzeichnet, dass**
aus den Punktwolken jeweils eine Gerade, insbesondere unter Meniskuskorrektur, abgeleitet wird, insbesondere durch Ausgleichsrechnung.

12. Verfahren nach Anspruch 10,
**dadurch gekennzeichnet, dass**
aus den Punktwolken der wenigstens zwei
Detektoren (5a, 5b, 5c, 5d, 5e, 5f) direkt eine gemeinsame Fläche (15) abgeleitet wird, insbesondere durch Ausgleichsrechnung.

13. Verfahren nach einem der Ansprüche 10 bis 12,
**dadurch gekennzeichnet, dass**
aus den Punktwolken ein Gütewert für die Berechnung der Fläche (15) und/oder der Geraden ermittelt wird, insbesondere in Abhängigkeit vom Gütewert ein Parameter für das Erzeugen der wenigstens zwei Projektionen (9a, 9b) angepasst wird, vorzugsweise eine Beleuchtungsintensität.

14. Verfahren nach einem Ansprüche 7 bis 13,
**dadurch gekennzeichnet, dass**
ein Referenzvektor für eine horizontierte Ausrichtung des Gerätes definiert wird und die Neigung durch Vergleichen der Lage des berechneten Normalenvektors (16) zum Referenzvektor bestimmt wird.

15. Verfahren nach einem der Ansprüche 7 bis 14,
**dadurch gekennzeichnet, dass**
das Erfassen und Umwandeln der Projektionen (9a, 9b) in Signale und das Bestimmen der Neigung kontinuierlich erfolgen, insbesondere mit einer Kumulation erfasster Signale.
